# FASCICULE DE BREVET EUROPEEN

(11) **EP 3 319 818 B1**
(45) Date de publication et mention de la délivrance du brevet: **04.09.2019**
(21) Numéro de dépôt: 16734692.3
(22) Date de dépôt: 06.07.2016
(51) Int. Cl.: B60C 15/00, B60C 1/00, B60C 15/06

(54) **PNEUMATIQUE COMPORTANT DES MELANGES ELASTOMERIQUES A BAS TAUX DE SOUFRE**
REIFEN MIT SCHWEFELARMEN ELASTOMERMISCHUNGEN
TYRE COMPRISING LOW-SULPHUR ELASTOMER MIXTURES

(30) Priorité: 10.07.2015 FR 1556554
(43) Date de publication de la demande: 16.05.2018
(73) Titulaire: Compagnie Générale des Etablissements Michelin, 63000 Clermont-Ferrand (FR)
(72) Inventeur: GUERBERT-JUBERT, Jean-Luc, 63040 Clermont-Ferrand Cedex 9 (FR); BESTGEN, Luc, 63040 Clermont-Ferrand Cedex 9 (FR); VASSEUR, Didier, 63040 Clermont-Ferrand Cedex 9 (FR); NAYRAT, Delphine, 63040 Clermont-Ferrand Cedex 9 (FR)
(74) Mandataire: Le Cam, Stéphane Georges Elie
(86) Numéro de dépôt international: PCT/EP2016/065901
(87) Numéro de publication internationale: WO 2017/009119

(56) Documents cités:
- EP-A1- 0 943 656
- FR-A1- 2 383 028

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

De tels pneumatiques comportent encore usuellement au niveau des bourrelets une ou plusieurs couches d'éléments de renforcement appelées raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

La demande de brevet FR 2383 028 A1 décrit un pneumatique dont le retournement de l'armature de carcasse est renforcé par un tel raidisseur.

Bien que les pneumatiques ne soient pas prévus pour ces cas, il arrive que dans certains pays certains pneumatiques sont utilisés en dehors des conditions normales notamment en termes de charges portées et de pression de gonflage. La présence de couches d'éléments de renforcement ou raidisseurs permet encore d'améliorer la résistance des pneumatiques à de telles sollicitations. En effet, il semble que le raidisseur va protéger l'armature de carcasse dans la zone du bourrelet du pneumatique contre ces sollicitations correspondant à des usages excessifs et des échauffements excessifs dans la zone des bourrelets. Cette protection ne se fait toutefois pas sans risque d'endommagement dudit raidisseur ; on observe notamment lors de tels usages des endommagements par fissuration des mélanges polymériques environnant l'extrémité radialement extérieure du raidisseur.

Afin d'éviter des dégradations plus importantes de la zone du bourrelet et notamment une propagation des fissures en direction du retournement de l'armature de carcasse, il est usuel de décaler les extrémités du retournement de l'armature de carcasse et du raidisseur selon la direction radiale.

La demande de brevet EP 0 943 656 A1 décrit par ailleurs des exemples de mélanges ne comportant pas de soufre pour constituer une partie de la zone du bourrelet d'un pneumatique.

Les inventeurs se sont ainsi donnés pour mission de fournir des pneumatiques pour véhicules lourds de type "Poids Lourds", dont les performances d'endurance sont encore améliorées lors, notamment, d'un usage excessif en termes de charges portées et de pression de gonflage pénalisant pour les mélanges élastomériques constitutifs du pneumatique notamment dans les zones des bourrelets du pneumatique.

Ce but a été atteint selon l'invention par un pneumatique à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, ladite au moins une couche d'éléments de renforcement de l'armature de carcasse étant ancrée dans chacun des bourrelets par retournement autour d'une tringle, ledit retournement d'armature de carcasse étant renforcé par au moins une couche d'éléments de renforcement ou raidisseur, la densité relative de ponts de soufre mesurée selon la méthode de gonflement à l'équilibre étant inférieure à 5 % dans au moins 30 % des mélanges élastomériques présents dans la surface d'au moins une zone Z dans un plan méridien, ladite au moins une zone Z étant définie dans un plan méridien par l'union de deux ovales 01, 02 :
- un premier ovale 01 constitué d'une part, dans sa partie radialement la plus intérieure, d'une demi-ellipse E1, centrée sur l'extrémité R du retournement de ladite au moins une couche d'armature de carcasse, dont le grand axe est tangent à l'extrémité R au retournement de ladite au moins une couche d'armature de carcasse, la longueur du grand axe étant égale à 30 mm et la longueur du petit axe étant égale à 12 mm et d'autre part, dans sa partie radialement la plus extérieure, d'un demi-cercle C1, de diamètre D1 égal à 12 mm, centré sur l'extrémité R du retournement de ladite au moins une couche d'armature de carcasse,
- un deuxième ovale 02 constitué d'une part, dans sa partie radialement la plus intérieure, d'une demi-ellipse E2, centrée sur l'extrémité la plus extérieure T de ladite au moins une couche d'éléments de renforcement ou raidisseur, dont le grand axe est tangent à l'extrémité T à ladite au moins une couche d'éléments de renforcement ou raidisseur, la longueur du grand axe étant égale à 30 mm et la longueur du petit axe étant égale à 12 mm et d'autre part, dans sa partie radialement la plus extérieure, d'un demi-cercle C2, de diamètre D2 égal à 12 mm, centré sur l'extrémité la plus extérieure T de ladite au moins une couche d'éléments de renforcement ou raidisseur, et
lesdits mélanges élastomériques présents dans la surface de ladite au moins une zone Z dans un plan méridien étant des compositions à base d'au moins un élastomère diénique choisi dans le groupe des élastomères diéniques constitué par les polybutadiènes (en abrégé "BR"), les polyisoprènes (IR) de synthèse, le caoutchouc naturel (NR), les copolymères d'isoprène, copolymères de butadiène à l'exception des copolymères butadiène-nitrile (NBR), à l'exclusion des élastomères diéniques portant des fonctions carboxyles et les mélanges de ces élastomères diéniques.

Au sens de l'invention, l'élastomère diénique de la composition conforme à l'invention est choisi dans le groupe des élastomères diéniques constitué par les polybutadiènes (en abrégé "BR"), les polyisoprènes (IR) de synthèse, le caoutchouc naturel (NR), les copolymères d'isoprène, les copolymères de butadiène à l'exception des copolymères butadiène-nitrile (NBR), et les mélanges de ces élastomères. De tels copolymères sont préférentiellement choisis dans le groupe constitué par les copolymères de butadiène-styrène (SBR), les copolymères d'isoprène-butadiène (BIR), les copolymères d'isoprène- styrène (SIR) et les copolymères d'isoprène-butadiène-styrène (SBIR). On entend par élastomères diéniques des élastomères diéniques modifiés ou non. S'ils sont modifiés, ils peuvent être couplés et/ou étoilés ou encore fonctionnalisés, en extrémité de chaîne ou le long de la chaîne à l'exception des élastomères portant des fonctions carboxyles.

Au sens de l'invention, la densité relative de ponts de soufre est la densité de ponts de soufre mesurée selon la méthode de gonflement à l'équilibre rapportée à la densité globale de ponts de réticulation mesurée selon la méthode de gonflement à l'équilibre.

Au sens de l'invention, l'armature de carcasse peut comporter plusieurs couches d'éléments de renforcement dont les extrémités sont retournées autour d'une tringle, les extrémités des différentes couches étant alors avantageusement radialement décalées. L'armature de carcasse peut encore comporter au moins une couche d'éléments de renforcement, axialement extérieure à ladite première couche d'armature de carcasse ancrée dans chacun des bourrelets par retournement autour d'une tringle, s'étendant d'un bourrelet à l'autre et dont les extrémités sont axialement extérieures au point axialement le plus intérieur de la tringle dans chaque bourrelet.

De préférence selon l'invention, ladite au moins une couche d'éléments de renforcement ou raidisseur est constituée d'éléments de renforcement orientés par rapport à la direction circonférentielle d'un angle inférieur à 45°, et de préférence encore inférieur à 25°.

Ces couches d'éléments de renforcement ou raidisseurs sont avantageusement disposées axialement à l'extérieur du retournement de l'armature de carcasse et s'étendent sur une hauteur dans le flanc supérieure à celle du retournement notamment pour couvrir les extrémités libres des éléments de renforcement dudit retournement. Ladite au moins une couche d'éléments de renforcement ou raidisseur peut être retournée autour de la tringle ou engagée au niveau de la tringle, l'extrémité radialement intérieure de ladite au moins une couche d'éléments de renforcement ou raidisseur étant alors avantageusement radialement intérieure au point de la tringle radialement le plus proche de l'axe de rotation

Avantageusement selon l'invention, lorsque le pneumatique comporte plusieurs couches d'éléments de renforcement ou raidisseurs, le point T est avantageusement l'extrémité desdites couches de renforcement ou raidisseurs radialement la plus extérieure.

Avantageusement encore, lorsque le pneumatique comporte plusieurs couches d'éléments de renforcement constituant l'armature de carcasse retournées autour d'une tringle, l'extrémité R est définie par l'extrémité du retournement la plus proche du point T.

Selon un mode de réalisation préféré de l'invention, la densité relative de ponts de soufre mesurée selon la méthode de gonflement à l'équilibre est inférieure à 5 % dans au moins 50 % des mélanges élastomériques présents dans la surface de ladite au moins une zone Z dans un plan méridien.

Avantageusement selon l'invention, le point R formant l'extrémité du retournement de ladite au moins une couche d'armature de carcasse dans un plan méridien est au contact ou inclus dans lesdits au moins 30 % des mélanges élastomériques présents dans la surface de ladite au moins une zone Z.

Avantageusement également selon l'invention, le point T formant l'extrémité radialement la plus extérieure de ladite au moins une couche d'éléments de renforcement ou raidisseur dans un plan méridien est au contact ou inclus dans lesdits au moins 30 % des mélanges élastomériques présents dans la surface de ladite au moins une zone Z.

Selon un mode de réalisation préféré de l'invention, l'extrémité radialement extérieure T du raidisseur est radialement extérieure à l'extrémité R du retournement de ladite au moins une couche d'armature de carcasse.

Selon une variante avantageuse de l'invention, la densité relative de ponts ioniques mesurée selon la méthode de gonflement à l'équilibre est supérieure à 50 % dans lesdits au moins 30 % des mélanges élastomériques présents dans la surface de ladite au moins une zone Z dans un plan méridien et de préférence dans lesdits au moins 50 % des mélanges élastomériques présents dans la surface de ladite au moins une zone Z dans un plan méridien.

Au sens de l'invention, la densité relative de ponts ioniques est la densité de ponts ioniques mesurée selon la méthode de gonflement à l'équilibre rapportée à la densité globale de ponts de réticulation mesurée selon la méthode de gonflement à l'équilibre.

De préférence encore, la densité relative de ponts ioniques mesurée selon la méthode de gonflement à l'équilibre est supérieure à 60 % dans lesdits au moins 30 % des mélanges élastomériques présents dans la surface de ladite au moins une zone Z dans un plan méridien et de préférence dans lesdits au moins 50 % des mélanges élastomériques présents dans la surface de ladite au moins une zone Z dans un plan méridien.

Plus préférentiellement encore, la densité relative de ponts ioniques mesurée selon la méthode de gonflement à l'équilibre est supérieure à 70 % dans lesdits au moins 30 % des mélanges élastomériques présents dans la surface de ladite au moins une zone Z dans un plan méridien et de préférence dans lesdits au moins 50 % des mélanges élastomériques présents dans la surface de ladite au moins une zone Z dans un plan méridien.

Avantageusement encore selon l'invention, la densité relative de ponts carbone-carbone mesurée selon la méthode de gonflement à l'équilibre est inférieure à 45 % dans lesdits au moins 30 % des mélanges élastomériques présents dans la surface de ladite au moins une zone Z dans un plan méridien et de préférence dans lesdits au moins 50 % des mélanges élastomériques présents dans la surface de ladite au moins une zone Z dans un plan méridien.

Au sens de l'invention, la densité relative de ponts carbone-carbone est la densité de ponts carbone-carbone mesurée selon la méthode de gonflement à l'équilibre rapportée à la densité globale de ponts de réticulation mesurée selon la méthode de gonflement à l'équilibre.

De préférence encore, la densité relative de ponts carbone-carbone mesurée selon la méthode de gonflement à l'équilibre est inférieure à 35 % dans lesdits au moins 30 % des mélanges élastomériques présents dans la surface de ladite au moins une zone Z dans un plan méridien et de préférence dans lesdits au moins 50 % des mélanges élastomériques présents dans la surface de ladite au moins une zone Z dans un plan méridien.

Plus préférentiellement encore, la densité relative de ponts carbone-carbone mesurée selon la méthode de gonflement à l'équilibre est inférieure à 25 % dans lesdits au moins 30 % des mélanges élastomériques présents dans la surface de ladite au moins une zone Z dans un plan méridien et de préférence dans lesdits au moins 50 % des mélanges élastomériques présents dans la surface de ladite au moins une zone Z dans un plan méridien.

Selon l'invention, les mesures de densités de réticulation sont effectuées à partir de la méthode de gonflement à l'équilibre. Pour mesurer la densité de réticulation on réalise un gonflement des mélanges, préparés sous forme d'échantillons, dans du toluène pendant 72 heures. On mesure le poids des échantillons immédiatement après avoir évacué l'excès de solvant au moyen d'un papier buvard. Le gonflement des échantillons et l'absorption de solvant est inversement proportionnel à la présence et donc à la densité de ponts de réticulation.

Les échantillons sont ensuite séchés sous vide jusqu'à atteindre un poids constant. De la différence entre les deux valeurs de poids mesurées, on en déduit la densité globale de ponts de réticulation.

On utilise de l'isopropyl mercaptan pour attaquer sélectivement les ponts polysulfurés et de l'hexanethiol pour casser sans distinction les ponts polysulfures et disulfures. Les échantillons sont traités pendant 2 heures avec l'isopropyl mercaptan et 48 heures avec l'hexanethiol à 25°C.

Après chacun de ces traitements, une mesure de densité de ponts de réticulation est calculée à partir des mesures de poids sur les échantillons après gonflement, telle que décrit précédemment.

Il est ainsi possible de déterminer le pourcentage de ponts de soufre des échantillons au regard de la densité globale de ponts de réticulation. Cette mesure de ponts de soufre est notamment décrite dans l'ouvrage « RUBBER CHEMISTRY AND TECHNOLOGY, Vol. 87, No. 1, pp. 21-30 (2014) ».

Afin de déterminer le pourcentage de ponts ioniques, les mêmes échantillons subissent une attaque chimique par un traitement dans le toluène en présence d'acide chloroacétique pendant 120 heures. Un tel traitement est décrit dans l'ouvrage « POLYMER COMPOSITES - 2011 1513 ».

Les échantillons ainsi traités, on effectue à nouveau des mesures de la densité de ponts de réticulation par un gonflement des mélanges dans du toluène pendant 72 heures. On mesure comme précédemment le poids des échantillons immédiatement après avoir évacué l'excès de solvant au moyen d'un papier buvard puis après séchage jusqu'à un poids constant. Les ponts Carbone-Carbone constitue le réseau résiduel non attaqué.

On en déduit par ailleurs le pourcentage de ponts ioniques par différence des valeurs obtenues précédemment.

Les essais réalisés avec des pneumatiques ainsi réalisés conformément à l'invention ont montré que les pneumatiques présentent des performances en termes d'endurance améliorées notamment lors de roulage conduisant à des montées en température importantes des mélanges élastomériques présents dans les zones des bourrelets notamment lors d'un usage excessif en termes de charges portées et de pression de gonflage.

Les inventeurs pensent avoir su mettre en évidence que la densité relative de ponts de soufre inférieure à 5 % dans au moins une partie de la zone Z, telle que définie selon l'invention permet de diminuer la sensibilité des pneumatiques aux effets de vieillissement notamment dus aux élévations de température. En effet, les inventeurs pensent interpréter ces résultats par des choix de mélanges élastomériques dans des zones précisément définies qui confèrent une meilleure résistance au vieillissement notamment dû aux élévations de température.

Selon un mode de réalisation avantageux de l'invention, un mélange élastomérique présentant une densité relative de ponts de soufre mesurée selon la méthode de gonflement à l'équilibre inférieure à 5 % est une composition à base d'au moins un élastomère diénique, un dérivé du diacrylate de zinc sous la forme d'un sel de zinc de formule (I) 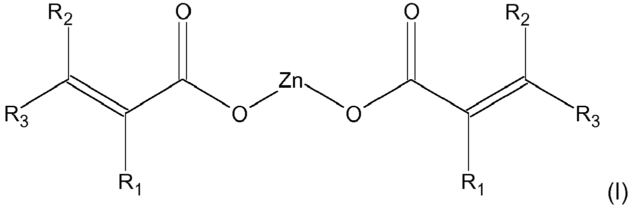 dans laquelle R1, R2 et R3 représentent indépendamment un atome d'hydrogène ou un groupe hydrocarboné en C1-C7 choisi parmi les groupes alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique, ladite composition comprenant en outre un peroxyde, les taux de dérivé de diacrylate de zinc et de peroxyde étant tels que le rapport du taux de peroxyde et du taux de dérivé de diacrylate de zinc est inférieur ou égal à 0,09.

Avantageusement encore, ladite composition ne comprend pas de charge renforçante ou en comprend moins de 65 pce, le rapport du taux de charge et du taux de dérivé de diacrylate de zinc étant inférieur ou égal à 4.

Les inventeurs ont encore mis en évidence que les pneumatiques réalisés conformément à ces modes de réalisations avantageux de l'invention, selon lesquels le taux de charge renforçante est réduit en comparaison de réalisations plus usuelles pour les mélanges élastomériques concernés, présentent des performances en termes de résistance au roulement améliorées. En effet, la présence de mélanges élastomériques comportant un faible taux de charge conduit à des valeurs d'hystérèse réduite en comparaison de celles de mélanges plus usuels.

Préférentiellement, l'invention est relative à une composition telle que définie ci-dessus dans laquelle R1, R2 et R3 représentent indépendamment un atome d'hydrogène ou un groupe méthyle. Plus préférentiellement, R2 et R3 représentent chacun un atome d'hydrogène. Plus préférentiellement également, R1 représente un groupe méthyle.

De préférence, l'invention est relative à une composition telle que définie ci-dessus dans laquelle la quantité de dérivé du diacrylate de zinc dans la composition est comprise dans un domaine allant de 5 à 40 pce (parties en poids pour cent parties en poids d'élastomère), de préférence de 7 à 35 pce.

Préférentiellement, l'invention est relative à une composition telle que définie ci-dessus dans laquelle le peroxyde est un peroxyde organique, préférentiellement présent dans une quantité inférieure ou égale à 3 pce. Plus préférentiellement, la quantité de peroxyde dans la composition est comprise dans un domaine allant de 0,1 à 3 pce ; plus préférentiellement de 0,2 à 2,5 pce, et plus préférentiellement encore de 0,25 à 1,8 pce.

De manière préférentielle, l'invention est relative à une composition telle que définie ci-dessus dans laquelle le rapport du taux de peroxyde et du taux de dérivé de diacrylate de zinc est compris entre 0,01 et 0,09 ; de préférence entre 0,03 et 0,09 et plus préférentiellement entre 0,05 et 0,08.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

De manière préférentielle, l'invention est relative à une composition telle que définie ci-dessus dans laquelle le taux de charge renforçante est compris dans un domaine allant de 5 à 60 pce ; plus préférentiellement de 10 à 50 pce, mieux, de 20 à 40 pce.

De préférence, l'invention est relative à une composition telle que définie ci-dessus dans laquelle la charge renforçante est du noir de carbone, de la silice ou un mélange de ces derniers. Préférentiellement, la charge renforçante est majoritairement constituée de noir de carbone.

Préférentiellement, l'invention est relative à une composition telle que définie ci-dessus dans laquelle le rapport du taux de charge et du taux de dérivé de diacrylate de zinc est compris dans un domaine allant de 0,15 à 3 ; de préférence de 1,5 à 3 ; alternativement et préférentiellement également de 0,7 à 1,3.

De préférence, l'invention est relative à une composition telle que définie ci-dessus ne contenant pas de soufre moléculaire ou d'agent donneur de soufre en tant qu'agent de vulcanisation ou en contient moins de 0,5 pce. Préférentiellement, la composition ne contient pas de soufre moléculaire ou d'agent donneur de soufre en tant qu'agent de vulcanisation ou en contient moins de 0,3 pce et de préférence moins de 0,1 pce. Préférentiellement, la composition ne contient pas d'accélérateur de vulcanisation.

De manière préférentielle, l'invention est relative à une composition telle que définie ci-dessus ne contenant pas d'agent antioxydant.

De préférence également, l'invention est relative à une composition telle que définie ci-dessus comprenant en outre un plastifiant, de préférence choisi parmi les résines plastifiantes, les huiles d'extension et leurs mélanges.

Dans la présente demande, l'expression « pce » (« phr » en anglais) signifie de manière connue parties en poids pour cent parties en poids d'élastomère. On exprime ainsi la quantité en poids des constituants des compositions par rapport à la quantité totale d'élastomères en poids considérée par convention à la valeur cent.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Selon un mode de réalisation préféré de l'invention, l'extrémité R du retournement de ladite au moins une couche d'armature de carcasse étant séparée de l'extrémité radialement la plus extérieure T de ladite au moins une couche d'éléments de renforcement ou raidisseur par une couche W de mélange élastomérique, au moins une partie de ladite couche W de mélange élastomérique forme au moins une partie desdits au moins 30 % des mélanges élastomériques présents dans la surface de ladite au moins une zone Z dans lesquels la densité relative de ponts de soufre mesurée selon la méthode de gonflement à l'équilibre est inférieure à 5 %.

De préférence encore selon l'invention, ladite au moins une couche constituant l'armature de carcasse étant formée d'éléments de renforcement insérés entre deux couches de calandrage de mélange élastomérique au moins une partie des couches de calandrage desdites au moins une couche constituant l'armature de carcasse forme au moins une partie desdits au moins 30 % des mélanges élastomériques présents dans la surface de ladite au moins une zone Z dans lesquels la densité relative de ponts de soufre mesurée selon la méthode de gonflement à l'équilibre est inférieure à 5 %.

Avantageusement encore, ladite au moins une couche d'éléments de renforcement ou raidisseur étant formée d'éléments de renforcement insérés entre deux couches de calandrage de mélange élastomérique au moins une partie des couches de calandrage de ladite au moins une couche d'éléments de renforcement ou raidisseur, forme au moins une partie desdits au moins 30 % des mélanges élastomériques présents dans la surface de ladite au moins une zone Z dans lesquels la densité relative de ponts de soufre mesurée selon la méthode de gonflement à l'équilibre est inférieure à 5 %.

Avantageusement encore, le retournement de l'armature de carcasse étant séparé de l'armature de carcasse par une couche Y de mélange élastomérique positionnée radialement à l'extérieur de la tringle, au moins une partie de ladite couche Y de mélange élastomérique forme au moins une partie desdits au moins 30 % des mélanges élastomériques présents dans la surface de ladite au moins une zone Z dans lesquels la densité relative de ponts de soufre mesurée selon la méthode de gonflement à l'équilibre est inférieure à 5 %.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

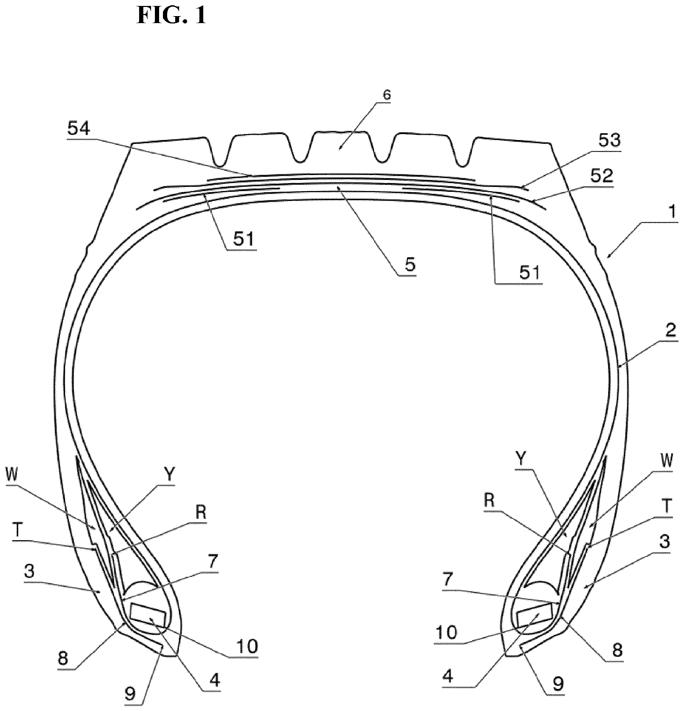

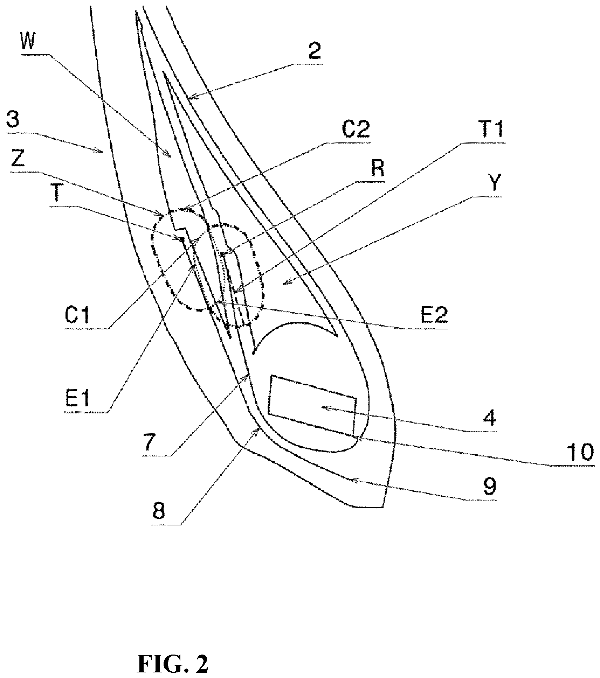

D'autres détails et caractéristiques avantageux de l'invention ressortiront ci-après de la description d'exemples de réalisation de l'invention en référence aux figures 1 et 2, qui représentent :
- figure 1, une vue méridienne d'un schéma d'un pneumatique selon un mode de réalisation de l'invention,
- figure 2, une représentation schématique agrandie de la zone du bourrelet du pneumatique de la figure 1.

Les figures ne sont pas représentées à l'échelle pour en simplifier la compréhension.

Sur la figure, le pneumatique 1, de dimension 295/80 R 22.5, comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6.

Sur la figure 1, l'armature de sommet 5 est formée radialement de l'intérieur à l'extérieur :
- d'une couche de triangulation 51 formée de câbles métalliques inextensibles 9.28 non frettés, orientés d'un angle égal à 65°,
- d'une première couche de travail 52 formée de câbles métalliques inextensibles 11.35 non frettés, continus sur toute la largeur de la nappe, orientés d'un angle égal à 26°,
- d'une seconde couche de travail 53 formée de câbles métalliques inextensibles 11.35 non frettés, continus sur toute la largeur de la nappe, orientés d'un angle égal à 18° et croisés avec les câbles métalliques de la première couche de travail,
- d'une couche de protection 54 formée de câbles métalliques élastiques 6.35 non frettés, continus sur toute la largeur de la nappe, orientés d'un angle égal à 18° dans le même sens que les câbles métalliques de la couche de travail 53.

La couche d'armature de carcasse 2 est enroulée autour d'une tringle 4 pour former un retournement 7. Le retournement 7 est encore renforcé par une couche d'éléments de renforcement ou raidisseur 8 qui vient coiffer l'extrémité R du retournement 7 et dont l'extrémité radialement intérieure 9 est engagée sous la tringle 4.

Cet engagement du raidisseur sous la tringle 4 se traduit par une extrémité radialement intérieure 9 dudit raidisseur radialement intérieure au point 10 de la tringle radialement le plus proche de l'axe de rotation, comme illustré sur la figure 2.

La figure 2 illustre plus en détail une représentation schématique en coupe d'un bourrelet 3 du pneumatique dans lequel on retrouve une partie de la couche d'armature de carcasse 2 enroulée autour d'une tringle 4 pour former un retournement 7 dont l'extrémité R est coiffée par le raidisseur 8.

L'extrémité radialement extérieure T du raidisseur 8 est ainsi radialement extérieure à l'extrémité R du retournement 7 de l'armature de carcasse et l'extrémité radialement intérieure 9 du raidisseur 8 est engagée sous la tringle 4.

L'extrémité R du retournement 7 de l'armature de carcasse est séparée du raidisseur 8 par une couche de mélange élastomérique W.

Un mélange élastomérique Y radialement extérieur à la tringle 4 sépare le retournement 7 de la couche 2 d'armature de carcasse.

Une zone Z est définie conformément à l'invention par l'union de deux ovales 01 et 02 dans le plan méridien de la figure:
- un premier ovale 01 constitué d'une part, dans sa partie radialement la plus intérieure, d'une demi-ellipse E1, centrée sur l'extrémité R du retournement de ladite au moins une couche d'armature de carcasse, dont le grand axe est tangent selon T1 à l'extrémité R au retournement de ladite au moins une couche d'armature de carcasse, la longueur du grand axe étant égale à 30 mm et la longueur du petit axe étant égale à 12 mm et d'autre part, dans sa partie radialement la plus extérieure, d'un demi-cercle C1, de diamètre D1 égal à 12 mm, centré sur l'extrémité R du retournement de ladite au moins une couche d'armature de carcasse,
- un deuxième ovale 02 constitué d'une part, dans sa partie radialement la plus intérieure, d'une demi-ellipse E2, centrée sur l'extrémité la plus extérieure T de ladite au moins une couche d'éléments de renforcement ou raidisseur, dont le grand axe est tangent à l'extrémité T à ladite au moins une couche d'éléments de renforcement ou raidisseur, la longueur du grand axe étant égale à 30 mm et la longueur du petit axe étant égale à 12 mm et d'autre part, dans sa partie radialement la plus extérieure, d'un demi-cercle C2, de diamètre D2 égal à 12 mm, centré sur l'extrémité la plus extérieure T de ladite au moins une couche d'éléments de renforcement ou raidisseur.

Différents pneumatiques ont été réalisés conformément à l'invention avec un pourcentage de la zone Z comportant une densité relative de ponts de soufre mesurée selon la méthode de gonflement à l'équilibre inférieure à 5 % variant entre 30 % et 80 %, des compositions spécifiques étant variablement utilisées pour le calandrage de l'armature de carcasse les calandrages du raidisseur ainsi que pour les couches mélanges W et Y.

La composition utilisée pour réaliser les couches de calandrage de la couche d'armature de carcasse et les couches de calandrages des raidisseurs et permettre d'obtenir une densité relative de ponts de soufre mesurée selon la méthode de gonflement à l'équilibre inférieure à 5 % est la suivante :

| | |
|---|---|
| NR (1) | 100 |
| Dérivé ZDA (2) | 20 |
| Peroxyde (3) | 1,5 |
| Peroxyde/dérivé ZDA | 0,075 |
| Charge (4) | 20 |
| Charge/dérivé ZDA | 1 |
| ZnO (5) | 6 |

La composition utilisée pour réaliser les couches W et Y et permettre d'obtenir une densité relative de ponts de soufre mesurée selon la méthode de gonflement à l'équilibre inférieure à 5 % est la suivante :

| | |
|---|---|
| NR (1) | 100 |
| Dérivé ZDA (2) | 20 |
| Peroxyde (3) | 1,5 |
| Peroxyde/dérivé ZDA | 0,075 |
| Charge (4) | 40 |
| Charge/dérivé ZDA | 2 |
| ZnO (5) | 6 |

| | |
|---|---|
| (1) Caoutchouc naturel (2) Diméthacrylate de zinc (ZDMA) « DIMALINK 634 » de la société CRAY VALLEY (3) Peroxyde de dicumyl « Dicup » de la société Hercules (4) Noir de carbone grade ASTM N326 (société Cabot) (5) Oxyde de zinc (grade industriel - société Umicore) | |

Les compositions décrites ci-dessus conduisent à une densité relative de ponts ioniques de l'ordre de 80 % et une densité relative de ponts carbone/carbone de l'ordre de 20 %.

Il s'avère que les cinématiques de cuisson des mélanges caoutchouteux présentant une densité relative de ponts de soufre mesurée selon la méthode de gonflement à l'équilibre inférieure à 5 % sont différentes des mélanges plus usuels dans la fabrication des pneumatiques. Pour faciliter la cuisson des différents mélanges, les inventeurs ont appliqué des méthodes voisines de celles des opérations de rechapage pour permettre une cuisson de la bande de roulement indépendante de la cuisson des autres mélanges. La cuisson des différentes zones du pneumatique peut ainsi être maîtrisée.

Un premier pneumatique P1 selon l'invention comporte une couche W, au moins la partie des calandrages de la couche d'armature de carcasse présente dans la surface de la zone Z et au moins la partie des calandrages du raidisseur présente dans la surface de la zone Z dont les mélanges caoutchouteux sont réalisés avec la composition décrite ci-dessus. La surface occupée par ces mélanges représente 50 % de la surface de la zone Z.

Un deuxième pneumatique P2 selon l'invention comporte une couche W, au moins la partie des calandrages de la couche d'armature de carcasse présentes dans la surface de la zone Z et au moins la partie des calandrages du raidisseur présentes dans la surface de la zone Z et la couche Y dont les mélanges caoutchouteux sont réalisés avec la composition décrite ci-dessus. La surface occupée par ces mélanges représente 80 % de la surface de la zone Z.

Un pneumatique P3, non conforme à l'invention, comporte uniquement au moins la partie des calandrages de la couche d'armature de carcasse présente dans la surface de la zone Z et au moins la partie des calandrages du raidisseur présente dans la surface de la zone Z. La surface occupée par ces mélanges représente 20 % de la surface de la zone Z.

Un pneumatique de référence R est réalisé, celui-ci ne comportant aucun mélange caoutchouteux dans la zone Z présentant une densité relative de ponts de soufre mesurée selon la méthode de gonflement à l'équilibre inférieure à 5 %

Des roulages ont été effectués avec ces quatre pneumatiques pour évaluer leurs performances en termes d'endurance.

Ces essais d'endurance ont été réalisés sur une machine de test, à volant extérieur de développement 8.5 mètres, en imposant aux pneumatiques des flèches de 25 à 35 % pour des vitesses de roulage de 60 à 20 Km/h.

Avant d'effectuer les essais, les pneumatiques subissent un vieillissement accéléré en étuve dans des conditions de teneur en oxygène du gaz de gonflage et de température, adaptées pour produire un état de thermo-oxydation des matériaux représentatif d'un usage moyen durant une vie en clientèle.

Les essais réalisés conduisent pour les pneumatiques de référence à des performances établissant la base 100. Les tests sont arrêtés lors de l'apparition d'une dégradation de la zone basse du pneumatique.

| | R | P1 | P2 | P3 |
|---|---|---|---|---|
| Km | 100 | 120 | 130 | 100 |

Ces résultats confirment les gains en endurance obtenus avec des mélanges élastomériques définis et localisés conformément à l'invention dans la zone Z.

## Revendications

1. Pneumatique (1) à armature de carcasse radiale (2), constituée d'au moins une couche d'éléments de renforcement, ledit pneumatique comprenant une armature de sommet (5), elle-même coiffée radialement d'une bande de roulement (6), ladite bande de roulement (6) étant réunie à deux bourrelets (3) par l'intermédiaire de deux flancs, ladite au moins une couche d'éléments de renforcement de l'armature de carcasse (2) étant ancrée dans chacun des bourrelets (3) par retournement autour d'une tringle (4), ledit retournement (7) d'armature de carcasse étant renforcé par au moins une couche d'éléments de renforcement ou raidisseur (8), **caractérisé en ce que** la densité relative de ponts de soufre mesurée selon la méthode de gonflement à l'équilibre est inférieure à 5 % dans au moins 30 % des mélanges élastomériques présents dans la surface d'au moins une zone (Z) dans un plan méridien, **en ce que** ladite au moins une zone (Z) est définie dans un plan méridien par l'union de deux ovales O1, O2 :
- un premier ovale O1 constitué d'une part, dans sa partie radialement la plus intérieure, d'une demi-ellipse (E1), centrée sur l'extrémité (R) du retournement (7) de ladite au moins une couche d'armature de carcasse (2), dont le grand axe est tangent à l'extrémité (R) au retournement (7) de ladite au moins une couche d'armature de carcasse (2), la longueur du grand axe étant égale à 30 mm et la longueur du petit axe étant égale à 12 mm et d'autre part, dans sa partie radialement la plus extérieure, d'un demi-cercle (C1), de diamètre D1 égal à 12 mm, centré sur l'extrémité (R) du retournement (7) de ladite au moins une couche d'armature de carcasse (2),
- un deuxième ovale O2 constitué d'une part, dans sa partie radialement la plus intérieure, d'une demi-ellipse (E2), centrée sur l'extrémité la plus extérieure (T) de ladite au moins une couche d'éléments de renforcement ou raidisseur (8), dont le grand axe est tangent à l'extrémité (T) à ladite au moins une couche d'éléments de renforcement ou raidisseur (8), la longueur du grand axe étant égale à 30 mm et la longueur du petit axe étant égale à 12 mm et d'autre part, dans sa partie radialement la plus extérieure, d'un demi-cercle (C2), de diamètre D2 égal à 12 mm, centré sur l'extrémité la plus extérieure (T) de ladite au moins une couche d'éléments de renforcement ou raidisseur (8), et
**en ce que** lesdits mélanges élastomériques présents dans la surface de ladite au moins une zone (Z) dans un plan méridien sont des compositions à base d'au moins un élastomère diénique choisi dans le groupe des élastomères diéniques constitué par les polybutadiènes (en abrégé "BR"), les polyisoprènes (IR) de synthèse, le caoutchouc naturel (NR), les copolymères d'isoprène, les copolymères de butadiène à l'exception des copolymères butadiène-nitrile (NBR), à l'exclusion des élastomères diéniques portant des fonctions carboxyles, et les mélanges de ces élastomères diéniques.

2. Pneumatique (1) selon la revendication 1, **caractérisé en ce que** la densité relative de ponts de soufre mesurée selon la méthode de gonflement à l'équilibre est inférieure à 5 % dans au moins 50 % des mélanges élastomériques présents dans la surface de ladite au moins une zone (Z) dans un plan méridien.

3. Pneumatique (1) selon la revendication 1 ou 2, **caractérisé en ce que** lesdits mélanges élastomériques présents dans la surface de ladite au moins une zone (Z) dans un plan méridien sont des compositions à base d'au moins un élastomère diénique, un dérivé du diacrylate de zinc sous la forme d'un sel de zinc de formule (I) 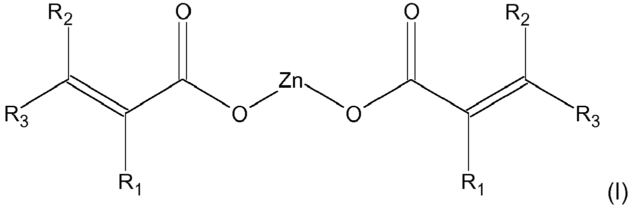 dans laquelle R1, R2 et R3 représentent indépendamment un atome d'hydrogène ou un groupe hydrocarboné en C1-C7 choisi parmi les groupes alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique, lesdites compositions comprenant en outre un peroxyde, les taux de dérivé de diacrylate de zinc et de peroxyde étant tels que le rapport du taux de peroxyde et du taux de dérivé de diacrylate de zinc est inférieur ou égal à 0,09.

4. Pneumatique (1) selon la revendication 3, **caractérisé en ce que** le peroxyde est un peroxyde organique, préférentiellement présent dans une quantité inférieure ou égale à 3 pce.

5. Pneumatique (1) selon l'une des revendications 3 ou 4, **caractérisé en ce que** le rapport du taux de peroxyde et du taux de dérivé de diacrylate de zinc est compris entre 0,01 et 0,09.

6. Pneumatique (1) selon l'une des revendications précédentes, **caractérisé en ce que,** dans un plan méridien, le point (R) formant l'extrémité du retournement (7) de ladite au moins une couche d'armature de carcasse (2) est au contact ou inclus dans lesdits au moins 30 % des mélanges élastomériques présents dans la surface de ladite au moins une zone (Z).

7. Pneumatique (1) selon l'une des revendications précédentes, **caractérisé en ce que,** dans un plan méridien, le point (T) formant l'extrémité radialement la plus extérieure de ladite au moins une couche d'éléments de renforcement ou raidisseur (8) est au contact ou inclus dans lesdits au moins 30 % des mélanges élastomériques présents dans la surface de ladite au moins une zone (Z).

8. Pneumatique (1) selon l'une des revendications précédentes, **caractérisé en ce que** la densité relative de ponts ioniques mesurée selon la méthode de gonflement à l'équilibre est supérieure à 50 % dans lesdits au moins 30 % des mélanges élastomériques présents dans la surface de ladite au moins une zone (Z) dans un plan méridien et de préférence dans lesdits au moins 50 % des mélanges élastomériques présents dans la surface de ladite au moins une zone (Z) dans un plan méridien.

9. Pneumatique (1) selon l'une des revendications précédentes, **caractérisé en ce que** la densité relative de ponts carbone-carbone mesurée selon la méthode de gonflement à l'équilibre est inférieure à 45 % dans lesdits au moins 30 % des mélanges élastomériques présents dans la surface de ladite au moins une zone (Z) dans un plan méridien et de préférence dans lesdits au moins 50 % des mélanges élastomériques présents dans la surface de ladite au moins une zone (Z) dans un plan méridien.

10. Pneumatique (1) selon l'une des revendications précédentes, l'extrémité (R) du retournement (7) de ladite au moins une couche d'armature de carcasse (2) étant séparée de l'extrémité radialement la plus extérieure (T) de ladite au moins une couche d'éléments de renforcement ou raidisseur (8) par une couche (W) de mélange élastomérique, **caractérisé en ce qu'au** moins une partie de ladite couche (W) de mélange élastomérique forme au moins une partie desdits au moins 30 % des mélanges élastomériques présents dans la surface de ladite au moins une zone (Z).

11. Pneumatique (1) selon l'une des revendications précédentes, ladite au moins une couche constituant l'armature de carcasse (2) étant formée d'éléments de renforcement insérés entre deux couches de calandrage de mélange élastomérique, **caractérisé en ce que** au moins une partie des couches de calandrage de ladite au moins une couche constituant l'armature de carcasse (2) forme au moins une partie desdits au moins 30 % des mélanges élastomériques présents dans la surface de ladite au moins une zone (Z).

12. Pneumatique (1) selon l'une des revendications précédentes, ladite au moins une couche d'éléments de renforcement ou raidisseur (8) étant formée d'éléments de renforcement insérés entre deux couches de calandrage de mélange élastomérique, **caractérisé en ce qu'**au moins une partie des couches de calandrage de ladite au moins une couche d'éléments de renforcement ou raidisseur (8) forme au moins une partie desdits au moins 30 % des mélanges élastomériques présents dans la surface de ladite au moins une zone (Z).

13. Pneumatique (1) selon l'une des revendications précédentes, le retournement (7) de l'armature de carcasse étant séparé de l'armature de carcasse par une couche (Y) de mélange élastomérique positionnée radialement à l'extérieur de la tringle (4), **caractérisé en ce qu'**au moins une partie de ladite couche (Y) de mélange élastomérique forme au moins une partie desdits au moins 30 % des mélanges élastomériques présents dans la surface de ladite au moins une zone (Z).

14. Pneumatique (1) selon l'une des revendications précédentes, **caractérisé en ce que** ladite au moins une couche d'éléments de renforcement ou raidisseur (8) est constituée d'éléments de renforcement orientés par rapport à la direction circonférentielle d'un angle inférieur à 45°, et de préférence inférieur à 25°.

15. Pneumatique (1) selon l'une des revendications précédentes, **caractérisé en ce que** l'extrémité radialement extérieure (T) du raidisseur (8) est radialement extérieure à l'extrémité (R) du retournement (7) de ladite au moins une couche d'armature de carcasse (2).

## Patentansprüche

1. Reifen (1) mit radialer Karkassenverstärkung (2), die aus mindestens einer Schicht aus Verstärkungselementen gebildet ist, wobei der Reifen eine Oberteilverstärkung (5) umfasst, die selbst radial von einer Lauffläche (6) bedeckt ist, wobei die Lauffläche (6) über zwei Seitenwände mit zwei Wülsten (3) verbunden ist, wobei die mindestens eine Schicht aus Verstärkungselementen der Karkassenverstärkung (2) durch Umschlagen um einen Wulstkern (4) herum in jedem der Wülste (3) verankert ist, wobei der Umschlag (7) der Karkassenverstärkung mit mindestens einer Schicht aus Verstärkungselementen oder einer Versteifung (8) verstärkt ist, **dadurch gekennzeichnet, dass** die relative Dichte von Schwefelbrücken, bestimmt nach dem Gleichgewichtsquellungsverfahren, in mindestens 30% der Elastomermischungen, die in der Fläche von mindestens einer Zone (Z) in einer Meridionalebene vorhanden sind, unter 5% beträgt, dadurch, dass die mindestens eine Zone (Z) in einer Meridionalebene durch die Verbindung von zwei Ovalen O1, O2 definiert ist:
- ein erstes Oval O1, das einerseits, in seinem radial am weitesten innen liegenden Abschnitt, aus einer Halbellipse (E1), die auf das Ende (R) des Umschlags (7) der mindestens einen Schicht der Karkassenverstärkung (2) ausgerichtet ist, deren große Achse am Ende (R) des Umschlags (7) der mindestens einen Schicht der Karkassenverstärkung (2) anliegt, wobei die Länge der großen Achse 30 mm beträgt und die Länge der kleinen Achse 12 mm beträgt, und andererseits, in seinem radial am weitesten außen liegenden Abschnitt, aus einem Halbkreis (C1) mit einem Durchmesser D1 von 12 mm gebildet ist, der auf das Ende (R) des Umschlags (7) der mindestens einen Schicht der Karkassenverstärkung (2) ausgerichtet ist,
- ein zweites Oval O2, das einerseits, in seinem radial am weitesten innen liegenden Abschnitt, aus einer Halbellipse (E2), die auf das am weitesten außen liegende Ende (T) der mindestens einen Schicht aus Verstärkungselementen oder Versteifung (8) ausgerichtet ist, deren große Achse am Ende (T) an der mindestens einen Schicht aus Verstärkungselementen oder Versteifung (8) anliegt, wobei die Länge der großen Achse 30 mm beträgt und die Länge der kleinen Achse 12 mm beträgt, und andererseits, in seinem radial am weitesten außen liegenden Abschnitt, aus einem Halbkreis (C2) mit einem Durchmesser D2 von 12 mm gebildet ist, der auf das am weitesten außen liegende Ende (T) der mindestens einen Schicht aus Verstärkungselementen oder Versteifung (8) ausgerichtet ist, und
dadurch, dass die Elastomermischungen in der Fläche der mindestens einen Zone (Z) in einer Meridionalebene Zusammensetzungen auf Basis von mindestens einem Dienelastomer sind, das aus der Gruppe der Dienelastomere ausgewählt ist, die gebildet wird von Polybutadienen (abgekürzt "BR"), synthetischen Polyisoprenen (IR), Naturkautschuk (NR), Isopren-Copolymeren, Butadien-Copolymeren mit Ausnahme von Nitril-Butadien-Copolymeren (NBR), unter Ausschluss von Dienelastomeren mit Carboxylgruppen, und Mischungen aus diesen Dienelastomeren.

2. Reifen (1) nach Anspruch 1, **dadurch gekennzeichnet, dass** die relative Dichte von Schwefelbrücken, bestimmt nach dem Gleichgewichtsquellungsverfahren, in mindestens 50% der Elastomermischungen, die in der Fläche der mindestens einen Zone (Z) in einer Meridionalebene vorhanden sind, unter 5% beträgt.

3. Reifen (1) nach Anspruch 1 oder 2, **dadurch gekennzeichnet, dass** die Elastomermischungen, die in der Fläche der mindestens einen Zone (Z) in einer Meridionalebene vorhanden sind, Zusammensetzungen auf Basis von mindestens einem Dienelastomer sind, einem Zinkdiacrylat-Derivat in Form eines Zinksalzes mit der Formel (I) 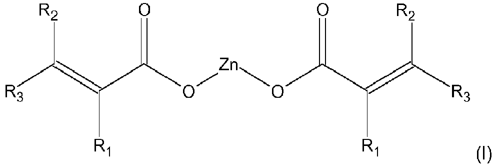 wobei R1, R2 und R3 unabhängig ein Wasserstoffatom oder eine Kohlenwasserstoffgruppe mit C1 bis C7 darstellen, die ausgewählt ist aus linearen, verzweigten oder cyclischen Alkylgruppen, aus Aralkylgruppen, Alkylarylgruppen und Arylgruppen, und gegebenenfalls unterbrochen von einem oder mehreren Heteroatomen, wobei R2 und R3 gemeinsam einen nicht aromatischen Ring bilden können, wobei die Zusammensetzungen ferner ein Peroxid umfassen, wobei der Gehalt an Zinkdiacrylat-Derivat und Peroxid derart ist, dass das Verhältnis des Gehalts an Peroxid und des Gehalts an Zinkdiacrylat-Derivat kleiner gleich 0,09 ist.

4. Reifen (1) nach Anspruch 3, **dadurch gekennzeichnet, dass** das Peroxid ein organisches Peroxid ist, das vorzugsweise in einer Menge von kleiner gleich 3 phr vorliegt.

5. Reifen (1) nach Anspruch 3 oder 4, **dadurch gekennzeichnet, dass** das Verhältnis des Gehalts an Peroxid und des Gehalts an Zinkdiacrylat-Derivat zwischen 0,01 und 0,09 liegt.

6. Reifen (1) nach einem der vorhergehenden Ansprüche, **dadurch gekennzeichnet, dass**, in einer Meridionalebene, der Punkt (R), der das Ende des Umschlags (7) der mindestens einen Schicht der Karkassenverstärkung (2) bildet, die mindestens 30% der Elastomermischungen, die in der Fläche der mindestens einen Zone (Z) vorhanden sind, berührt oder darin enthalten ist.

7. Reifen (1) nach einem der vorhergehenden Ansprüche, **dadurch gekennzeichnet, dass**, in einer Meridionalebene, der Punkt (T), der das radial am weitesten außen liegende Ende der mindestens einen Schicht aus Verstärkungselementen oder Versteifung (8) bildet, die mindestens 30% der Elastomermischungen, die in der Fläche der mindestens einen Zone (Z) vorhanden sind, berührt oder darin enthalten ist.

8. Reifen (1) nach einem der vorhergehenden Ansprüche, **dadurch gekennzeichnet, dass** die relative Dichte von Ionenbrücken, bestimmt nach dem Gleichgewichtsquellungsverfahren, in den mindestens 30% der Elastomermischungen, die in der Fläche der mindestens einen Zone (Z) in einer Meridionalebene vorhanden sind, und vorzugsweise in den mindestens 50% der Elastomermischungen, die in der Fläche der mindestens einen Zone (Z) in einer Meridionalebene vorhanden sind, über 50% beträgt.

9. Reifen (1) nach einem der vorhergehenden Ansprüche, **dadurch gekennzeichnet, dass** die relative Dichte von Kohlenstoff-Kohlenstoff-Brücken, bestimmt nach dem Gleichgewichtsquellungsverfahren, in den mindestens 30% der Elastomermischungen, die in der Fläche der mindestens einen Zone (Z) in einer Meridionalebene vorhanden sind, und vorzugsweise in den mindestens 50% der Elastomermischungen, die in der Fläche der mindestens einen Zone (Z) in einer Meridionalebene vorhanden sind, unter 45% beträgt.

10. Reifen (1) nach einem der vorhergehenden Ansprüche, wobei das Ende (R) des Umschlags (7) der mindestens einen Schicht der Karkassenverstärkung (2) von dem radial am weitesten außen liegenden Ende (T) der mindestens einen Schicht aus Verstärkungselementen oder Versteifung (8) durch eine Elastomermischung-Schicht (W) getrennt ist, **dadurch gekennzeichnet, dass** mindestens ein Abschnitt der Elastomermischung-Schicht (W) mindestens einen Abschnitt der mindestens 30% der Elastomermischungen, die in der Fläche der mindestens einen Zone (Z) vorhanden sind, bildet.

11. Reifen (1) nach einem der vorhergehenden Ansprüche, wobei die mindestens eine Schicht, die die Karkassenverstärkung (2) bildet, aus Verstärkungselementen gebildet ist, die zwischen zwei Elastomermischung-Zwischenschichten eingesetzt sind, **dadurch gekennzeichnet, dass** mindestens ein Abschnitt der Zwischenschichten der mindestens einen Schicht, die die Karkassenverstärkung (2) bildet, mindestens einen Abschnitt der mindestens 30% der Elastomermischungen, die in der Fläche der mindestens einen Zone (Z) vorhanden sind, bildet.

12. Reifen (1) nach einem der vorhergehenden Ansprüche, wobei die mindestens eine Schicht aus Verstärkungselementen oder Versteifung (8) aus Verstärkungselementen gebildet ist, die zwischen zwei Elastomermischung-Zwischenschichten eingesetzt sind, **dadurch gekennzeichnet, dass** mindestens ein Abschnitt der Zwischenschichten der mindestens einen Schicht aus Verstärkungselementen oder Versteifung (8) mindestens einen Abschnitt der mindestens 30% der Elastomermischungen, die in der Fläche der mindestens einen Zone (Z) vorhanden sind, bildet.

13. Reifen (1) nach einem der vorhergehenden Ansprüche, wobei der Umschlag (7) der Karkassenverstärkung von der Karkassenverstärkung durch eine Elastomermischung-Schicht (Y) getrennt ist, die radial außerhalb des Wulstkerns (4) platziert ist, **dadurch gekennzeichnet, dass** mindestens ein Abschnitt der Elastomermischung-Schicht (Y) mindestens einen Abschnitt der mindestens 30% der Elastomermischungen, die in der Fläche der mindestens einen Zone (Z) vorhanden sind, bildet.

14. Reifen (1) nach einem der vorhergehenden Ansprüche, **dadurch gekennzeichnet, dass** die mindestens eine Schicht aus Verstärkungselementen oder Versteifung (8) aus Verstärkungselementen gebildet ist, die bezogen auf die Umfangsrichtung unter einem Winkel von unter 45° und vorzugsweise unter 25° ausgerichtet sind.

15. Reifen (1) nach einem der vorhergehenden Ansprüche, **dadurch gekennzeichnet, dass** das radial äußere Ende (T) der Versteifung (8) radial außerhalb des Endes (R) des Umschlags (7) der mindestens einen Schicht der Karkassenverstärkung (2) liegt.

## Claims

1. Tyre (1) having a radial carcass reinforcement (2), consisting of at least one layer of reinforcing elements, said tyre comprising a crown reinforcement (5), which is itself covered radially with a tread (6), said tread (6) being joined to two beads (3) via two sidewalls, said at least one layer of reinforcing elements of the carcass reinforcement (2) being anchored in each of the beads (3) by an upturn around a bead wire (4), said carcass reinforcement upturn (7) being reinforced by at least one layer of reinforcing elements or stiffener (8), **characterized in that** the relative density of sulfur bridges measured according to the equilibrium swelling method is less than 5% in at least 30% of the elastomer compounds present in the surface of at least one zone (Z) in a meridian plane, **in that** said at least one zone (Z) is defined in a meridian plane by the combination of two ovals O1, O2:
- a first oval O1 consisting, on the one hand, in its radially innermost portion, of a semi-ellipse (E1), centred on the end (R) of the upturn (7) of said at least one carcass reinforcement layer (2), the major axis of which is tangent to the end (R) at the upturn (7) of said at least one carcass reinforcement layer (2), the length of the major axis being equal to 30 mm and the length of the minor axis being equal to 12 mm and, on the other hand, in its radially outermost portion, of a semicircle (C1), of diameter D1 equal to 12 mm, centred on the end (R) of the upturn (7) of said at least one carcass reinforcement layer (2),
- a second oval 02 consisting, on the one hand, in its radially innermost portion, of a semi-ellipse (E2), centred on the outermost end (T) of said at least one layer of reinforcing elements or stiffener (8), the major axis of which is tangent to the end (T) at said at least one layer of reinforcing elements or stiffener (8), the length of the major axis being equal to 30 mm and the length of the minor axis being equal to 12 mm and, on the other hand, in its radially outermost portion, of a semicircle (C2), of diameter D2 equal to 12 mm, centred on the outermost end (T) of said at least one layer of reinforcing elements or stiffener (8), and
**in that** said elastomer compounds present in the surface of said at least one zone (Z) in a meridian plane are compositions based on at least one diene elastomer selected from the group of diene elastomers consisting of polybutadienes (abbreviated to "BR"), synthetic polyisoprenes (IR), natural rubber (NR), isoprene copolymers, butadiene copolymers with the exception of butadiene-nitrile copolymers (NBR), apart from diene elastomers bearing carboxyl functions, and mixtures of these diene elastomers.

2. Tyre (1) according to Claim 1, **characterized in that** the relative density of sulfur bridges measured according to the equilibrium swelling method is less than 5% in at least 50% of the elastomer compounds present in the surface of said at least one zone (Z) in a meridian plane.

3. Tyre (1) according to Claim 1 or 2, **characterized in that** said elastomer compounds present in the surface of said at least one zone (Z) in a meridian plane are compositions based on at least one diene elastomer, a zinc diacrylate derivative in the form of a zinc salt of formula (I) 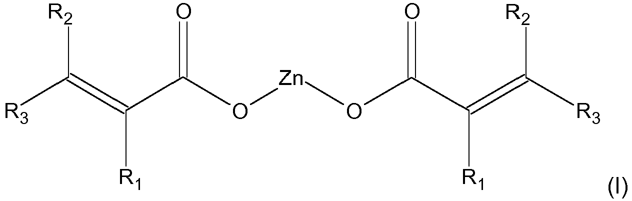 in which R1, R2 and R3 independently represent a hydrogen atom or a C1-C7 hydrocarbon-based group selected from linear, branched or cyclic alkyl groups, aralkyl groups, alkylaryl groups and aryl groups and optionally interrupted by one or more heteroatoms, it being possible for R2 and R3 to together form a nonaromatic ring, said compositions additionally comprising a peroxide, the zinc diacrylate derivative and peroxide contents being such that the ratio of the peroxide content to the zinc diacrylate derivative content is less than or equal to 0.09.

4. Tyre (1) according to Claim 3, **characterized in that** the peroxide is an organic peroxide, preferentially present in an amount of less than or equal to 3 phr.

5. Tyre (1) according to either of Claims 3 and 4, **characterized in that** the ratio of the peroxide content to the zinc diacrylate derivative content is between 0.01 and 0.09.

6. Tyre (1) according to one of the preceding claims, **characterized in that,** in a meridian plane, the point (R) forming the end of the upturn (7) of said at least one carcass reinforcement layer (2) is in contact with or included in said at least 30% of the elastomer compounds present in the surface of said at least one zone (Z).

7. Tyre (1) according to one of the preceding claims, **characterized in that,** in a meridian plane, the point (T) forming the radially outermost end of said at least one layer of reinforcing elements or stiffener (8) is in contact with or included in said at least 30% of the elastomer compounds present in the surface of said at least one zone (Z).

8. Tyre (1) according to one of the preceding claims, **characterized in that** the relative density of ionic bridges measured according to the equilibrium swelling method is greater than 50% in said at least 30% of the elastomer compounds present in the surface of said at least one zone (Z) in a meridian plane and preferably in said at least 50% of the elastomer compounds present in the surface of said at least one zone (Z) in a meridian plane.

9. Tyre (1) according to one of the preceding claims, **characterized in that** the relative density of carbon-carbon bridges measured according to the equilibrium swelling method is less than 45% in said at least 30% of the elastomer compounds present in the surface of said at least one zone (Z) in a meridian plane and preferably in said at least 50% of the elastomer compounds present in the surface of said at least one zone (Z) in a meridian plane.

10. Tyre (1) according to one of the preceding claims, the end (R) of the upturn (7) of said at least one carcass reinforcement layer (2) being separated from the radially outermost end (T) of said at least one layer of reinforcing elements or stiffener (8) by a layer (W) of elastomer compound, **characterized in that** at least one portion of said layer (W) of elastomer compound forms at least one portion of said at least 30% of the elastomer compounds present in the surface of said at least one zone (Z).

11. Tyre (1) according to one of the preceding claims, said at least one layer constituting the carcass reinforcement (2) being formed of reinforcing elements inserted between two elastomer compound calendering layers, **characterized in that** at least one portion of the calendering layers of said at least one layer constituting the carcass reinforcement (2) forms at least one portion of said at least 30% of the elastomer compounds present in the surface of said at least one zone (Z).

12. Tyre (1) according to one of the preceding claims, said at least one layer of reinforcing elements or stiffener (8) being formed of reinforcing elements inserted between two elastomer compound calendering layers, **characterized in that** at least one portion of the calendering layers of said at least one layer of reinforcing elements or stiffener (8) forms at least one portion of said at least 30% of the elastomer compounds present in the surface of said at least one zone (Z).

13. Tyre (1) according to one of the preceding claims, the upturn (7) of the carcass reinforcement being separated from the carcass reinforcement by a layer (Y) of elastomer compound positioned radially on the outside of the bead wire (4), **characterized in that** at least one portion of said layer (Y) of elastomer compound forms at least one portion of said at least 30% of the elastomer compounds present in the surface of said at least one zone (Z).

14. Tyre (1) according to one of the preceding claims, **characterized in that** said at least one layer of reinforcing elements or stiffener (8) consists of reinforcing elements oriented relative to the circumferential direction at an angle of less than 45°, and preferably less than 25°.

15. Tyre (1) according to one of the preceding claims, **characterized in that** the radially outer end (T) of the stiffener (8) is radially outside of the end (R) of the upturn (7) of said at least one carcass reinforcement layer (2).
